# EUROPÄISCHE PATENTANMELDUNG

(11) **EP 3 593 642 A1**
(43) Veröffentlichungstag der Anmeldung: **15.01.2020**
(21) Anmeldenummer: 18198038.4
(22) Anmeldetag: 01.10.2018
(51) Int. Cl.: A23C 15/12, A23C 15/02, A23L 27/24

(54) **INDUSTRIEBUTTER MIT VERBESSERTEM GESCHMACK**

(30) Priorität: 13.07.2018 EP 18183491
(71) Anmelder: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(57) **Zusammenfassung**

Vorgeschlagen wird eine Industriebutter mit verbessertem Geschmack, dadurch erhältlich oder erhalten, dass das Herstellungsverfahren einen Schritt umfasst, bei dem Butter einer mechanischen Belastung unterworfen und gleichzeitig mit 2,3-Butandion versetzt wird.

## Beschreibung

### PRIORITÄTSANSPRUCH

Die vorliegende Patentanmeldung beansprucht die Priorität der jüngeren Europäischen Patentanmeldung

### EP 18 183491.2

### vom 13. Juli 2018.

### GEBIET DER ERFINDUNG

Die Erfindung befindet sich auf dem Gebiet der Milchprodukte und betrifft eine neue Industriebutter mit verbessertem Geschmack, speziell gesteigertem Buttergeschmack, ein Verfahren zu Ihrer Herstellung, ihre Verwendung zur Herstellung von speziellen Backwaren und die entsprechenden Backwaren.

### STAND DER TECHNIK

Zu den beliebtesten Backwaren gehören der Blätterteig und ähnliche Produkte wie etwa Croissants oder Plunder.

Blätterteig (auch *Feuilletage*) ist ein mehrlagiger Ziehteig. In den Grundteig aus Mehl, Salz und Wasser, wird durch mehrfaches Ausrollen und Zusammenschlagen Butter, seltener auch ein anderes Ziehfett wie Margarine, eingearbeitet, was als "Tourieren" bezeichnet wird.

Während des Backens geht der Teig locker und blättrig auf. Durch die Backhitze verdampft das im Teig vorhandene Wasser, dehnt sich dabei aus und hebt das Gebäck an. Die Fettschichten wirken wie eine Sperre, sie lassen den Dampf nicht durch und halten ihn in der Teigschicht, bis das Teiggerüst stabil gebacken ist. Das Aufgehen (die Volumenvergrößerung) des Teiges wird dabei nur durch den im Teig entstehenden Wasserdampf, nicht durch zusätzliche Triebmittel oder Hefe hervorgerufen. Daher wird diese Herstellungsart "physikalische Lockerung" genannt.

Blätterteig ist, abhängig vom Eigengeschmack der verwendeten Fette, weitgehend geschmacksneutral und wird ohne Zuckerzusatz hergestellt. Dadurch eignet er sich sowohl für süße als auch für herzhafte Gebäcke.

Man unterscheidet Blätterteige nach der Art, nach der die Butter bzw. das Fett eingearbeitet wird:

*Deutscher Blätterteig:* hierbei liegen die Fettschichten innen, der Grundteig umschließt ihn (enthält nach den Leitsätzen für Feine Backwaren des deutschen Lebensmittelbuches mindestens 62 Kilogramm Butter, Milchfetterzeugnisse oder Margarine oder praktisch wasserfreie Fette, bezogen auf 100 Kilogramm Getreideerzeugnisse);

*Französischer Blätterteig:* hier umschließen die Fettschichten den Grundteig. Der Vorteil besteht darin, dass der Teig nicht austrocknen oder verkrusten kann, weil die Fettschicht außen liegt;

*Holländischer Blätterteig:* hier das Fett wird würfelförmig (kühl) in den Teig gearbeitet, ohne Ruhepausen touriert (daher auch: *Blitzblätterteig* genannt) und vor allem zu Blätterteigböden verarbeitet, da er nicht so gut aufgeht (hochzieht).

Backen portioniert. Holländischer Blätterteig nimmt durch seine kompakte Struktur eine Sonderstellung ein, denn das Gebäck kann nach dem Backen geschnitten werden. Durch diese Kompaktheit sind die Teige für spezielle Gebäcke, wie Prasselkuchen, Tortenböden, Tortendecken, gut geeignet.

Der Unterschied zwischen Blätterteig und anderen tourierten Gebäcken wie Plunder oder auch Croissants liegt vor allem im Teig. Dem Blätterteig wird keine Hefe zugegeben, im Plunder kommt zusätzlich Hefe als Triebmittel zum Einsatz. Außerdem enthalten die Teige, je nach Bedarf und Rezept, Zucker, Milch und weitere Zutaten. Der in der türkischen, griechischen und arabischen Küche verbreitete ebenfalls tourierte Yufka-, Fyllo- oder Masoukateig ist dem Blätterteig sehr ähnlich. Es sind auch Abwandlungen mit Öl oder Hefe bekannt.

Wichtig ist, dass das fertige Gebäck einerseits nicht unmittelbar nach Butter oder Fett schmeckt, andererseits aber einen buttrigen Gesamteindruck - sowohl optisch wie geschmacklich - hinterlässt, da dies von Verbrauchern als Qualitätsmerkmal angesehen wird.

Das Marktsegment, in dem Blätterteigbackwaren beheimatet sind, ist sehr homogen und lässt kaum Produktvielfalt zu. Über den Verkaufserfolg entscheiden allein Qualität und Preis. Dabei besteht seitens der Verbraucher sehr wohl Interesse an solchen Backwaren, die über zusätzliche sensorische oder geschmackliche Eigenschaften verfügen. Diese sind jedoch in der Auswahl übersichtlich: in der Regel handelt es sich um Croissants oder ähnliches, denen man nachträglich einen Kern aus Schokoladencreme oder Marmelade injiziert hat. Ursächlich ist hier, dass die Herstellung der Produkte praktisch ausschließlich maschinell erfolgt, da es einer millimetergenauen Ausrichtung der Ausrollwalzen bedarf, um einen homogenen Teig und nach dem Abbacken auch ein qualitativ hochwertiges Produkt herzustellen. Für diese Abläufe eignet sich das Einarbeiten weiterer Zutaten, die auch noch den Backprozess überstehen müssen, nur sehr bedingt, wenn überhaupt.

Übliche Industriebutter wird durch Rahmreifung - also eine Abfolge von Erwärmen und Abkühlen des Rahms zur Ausbildung einer semi-kristallinen plastischen Masse - und nachfolgender klassischen Verbutterung hergestellt.

Einen großen Einfluss auf die sensorische Qualität der Blätterteigwaren haben die Natur und natürlich auch die Menge der eingesetzten Butter, wobei gerade bei Blätterteigwaren wie Croissants der Wunsch des Verbrauchers nach einem besonders buttrigen Geschmack besteht. Dem stehen jedoch verschiedene Nachteile entgegen: zum einen führt eine höhere Einsatzmenge an Butter natürlich auch dazu, dass das ohnehin schon kalorienreiche Produkt noch einmal "schwerer" wird, was ernährungsphysiologisch nicht erwünscht ist.

Da zudem beim Tourieren Wärme in den Teig eingetragen wird, steigt mit der eingesetzten Buttermenge die Gefahr, dass diese ausölt, die Transportbänder der hochautomatisierten Backstraßen verklebt oder Teig auf den Bändern zum Rutschen bringt, was in beiden Fällen zu einem Produktionsabbruch führt. Im Teig selbst kann es dazu führen, dass die Butterphase unterbrochen wird und der Teig bei Backen sich nicht mehr auflockert und somit ein mangelhaftes Produkt entsteht.

### STAND DER TECHNIK

Aus der EP 0591763 B1 (SYMRISE) ist die Verwendung von speziellen alpha,beta-Diketonen insbesondere 2,3-Butandion, als Butteraromen bekannt.

### AUFGABE DER ERFINDUNG

Eine erste Aufgabe der vorliegenden Erfindung hat darin bestanden, eine Industriebutter mit verbesserten Geschmackseigenschaften zur Verfügung zu stellen. Konkret sollte die Butter gegenüber einem Vergleichsprodukt einen intensiveren und langanhaltenden Buttergeschmack besitzen.

Eine zweite Aufgabe der Erfindung hat darin bestanden, eine solche Butter zusätzlich auch mit höherer Härte herzustellen, um auf diese Weise die Gefahr des Ausölens zu vermindern.

### BESCHREIBUNG DER ERFINDUNG

Ein erster Gegenstand der Erfindung betrifft Industriebutter mit verbessertem Geschmack, dadurch erhältlich oder erhalten, dass das Herstellungsverfahren einen Schritt umfasst, bei dem Butter einer mechanischen Belastung, vorzugsweise unter Kühlung, unterworfen und gleichzeitig mit 2,3-Butandion versetzt wird.

Dem Fachmann ist bekannt, dass die Zugabe von Butteraroma zu einer herkömmlichen Butter, deren geschmacklichen Eindruck natürlich verstärkt. Bislang sind diese Versuche jedoch im industriellen Maßstab wenig erfolgreich gewesen, da sich das Butteraroma nur in der geschmolzenen Butter homogen verteilen lässt. Bei Temperaturen oberhalb von 30 °C, die dazu erforderlich sind, findet jedoch eine rasche Zersetzung des Aromas statt, so dass die Geschmacksverstärkung nur minimal ist, aber durch den zusätzlichen Erwärmungsschritt mit hohem technischen Aufwand und zudem zusätzlichen Kosten verbunden ist. Die kalte Einarbeitung des Aromas stellt indes auch keine Alternative dar, da dabei zwar keine Zersetzung erfolgt, aber eben auch keine Homogenisierung erreicht wird. Wird das Aroma jedoch nicht homogen verteilt, ist die Butter nicht mehr geschmacklich einwandfrei, insbesondere weil eine lokal hohe Konzentration des Aromas keinen Buttergeschmack mehr vermittelt, sondern nur noch ranzig schmeckt.

Überraschenderweise wurde gefunden, dass man konventionelle Verfahren zur Herstellung von Industriebutter mit nur geringem zusätzlichen Aufwand abändern kann, um das eingangs geschilderte Problem zu lösen, indem man nämlich im Verlauf der Herstellung der Industriebutter einen Schritt mit mechanischer Belastung - insbesondere Scherung durch Extrusion in einem so genannten Kombinator - vorsieht, der bei niedrigen Temperaturen durchgeführt werden kann und in dessen Verlauf dann das Butteraroma 2,3-Butandion eindosiert wird. Auf diese Weise wird das Problem der Temperaturbelastung vermieden, die mechanische Belastung führt indes dazu, dass durch Scherung unter Extrusionsbedingungen das Aroma homogen in der Butterphase verteilt wird. Gleichzeitig wird auch noch eine Industriebutter mit erhöhter Härte erhalten.

Die Forderung, dass das Herstellverfahren an irgendeiner Stelle einen Schritt aufweist, bei dem die Butter einer mechanischen Belastung vorzugsweise unter Kühlung unterworfen wird, in dessen Verlauf man das Butteraroma zudosiert, bedeutet, dass diese Maßnahme integrierter Teil der Butterherstellung sein kann. Anstelle der Industriebutter können auch sauerrahmbutter oder mild gesäuerte Butter eingesetzt werden.

Unter "Plastifizierung" ist ein Erwärmungsschritt zu verstehen, bei der die Butter sich noch nicht verflüssigt hat, jedoch leicht knet- und formbar wird. Dieser Temperaturbereich kann je nach Fettgehalt der Butter etwa variieren, liegt jedoch typisch im Bereich von etwa 18 bis etwa 25 °C.

Unter dem Begriff "Kühlung unter Belastastung" ist vorzugsweise zu verstehen, dass die wie oben beschrieben plastifizierte Butter einer Kühlung in einem oder mindestens zwei in Reihe geschalteten Schabewärmeaustauschern unterworfen wird, dessen Endprodukt dann eine "gehärtete" Industriebutter darstellt, die eine Härte im Bereich von etwa 2 bis etwa 5N und vorzugsweise etwa 3 bis etwa 4,5 N aufweist. Bei der Kühlung unter Last geschehen zwei Prozesse gleichzeitig: zum einen werden besonders kleine Kristalle erhalten, die dann zweitens miteinander verhaken und so ein besonders stabiles Kristallgitter ausbilden, was einer erhöhten Härte entspricht.

Schließlich stellt 2,3-Butandion, 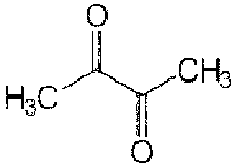 das auch als Diacetyl bezeichnet wird, das Butteraroma dar.

### HERSTELLVERFAHREN

Ein weiterer Gegenstand der Erfindung betrifft ein Verfahren zur Herstellung von Industriebutter mit verbessertem Geschmack, umfassend oder bestehend aus den folgenden Schritten:
(i) Separation von Rohmilch in eine Magermilch- und eine Rahmfraktion;
(ii) Reifung der Rahmfraktion in an sich bekannter Weise;
(iii) Verbutterung der gereiften Rahmfraktion in an sich bekannter Weise;
(iv) Erwärmen der so gewonnenen handelsüblichen Butter auf etwa 18 bis etwa 35 °C;
(v) Abkühlen der erwärmten Butter unter mechanischer Belastung;
(vi) Versetzen der abgekühlten Butter während des Schritts (v) mit 2,3-Butandion sowie
(vii) Formung der so gewonnenen geschmacksverbesserten Industriebutter.

Butter ist ein meist aus dem Rahm von Milch hergestelltes Streichfett, das nach EU-Verordnung zu mindestens 80 Prozent aus Milchfett besteht. Beim Butterungsprozess wird der Rahm geschlagen. Dadurch werden die Fettkügelchen des Milchfetts zerstört. Die Fetthülle bricht auf und das enthaltene Fett tritt aus. Jetzt kann sich das Fett untereinander verkleben. Dabei werden Teile der Fetthüllen, Wasser und etwas Milcheiweiß eingeschlossen. Aus der flüssigen Fett-in-Wasser-Emulsion wird eine feste Wasser-in-Fett-Emulsion. Der mit Abstand größte Teil dieser fettfreien Komponenten (Milchserum) tritt als Buttermilch aus. Die Butter selbst wird schließlich zu einer homogenen, geschmeidigen Masse geknetet, die anschließend geformt und abgepackt wird. Insofern stellen die Schritte (i) bis (iii) übliche und dem Fachmann notorisch bekannte Schritte dar.

Die Butterherstellung geht von einer Rahmfraktion aus, die durch Separation bei der Gewinnung von Magermilch aus Roh- bzw. Vollmilch gewonnen wird. Diese Rahmfraktion weist typisch einen Fettgehalt von etwa 35 Gew.-% und kann falls erforderlich durch Standardisierung, d.h. Zugabe von fremdem Rahm auf diesen Wert eingestellt werden.

Der Rahm wird pasteurisiert bzw. sterilisiert und anschließend einer so genannten Reifung unterworfen. Hierunter versteht man abwechselndes Erwärmen und wieder Abkühlen, was zur Ausbildung eines Kristallgitters führt und die Viskosität des Produktes ansteigen lässt. An dieser Stelle können dann zur Aromabildung auch Butterkulturen zugegeben werden bzw. eine Säuerung erfolgen.

Es folgt die eigentliche Verbutterung, bei der der gereifte Rahm bei etwa 10 °C in einer Butterungsmaschine mit rotierendem Zylinder geschlagen und gestoßen wird. Nach dem Abtrennen der Buttermilch wird eine handelsübliche Butter erhalten, die eine Härte im Bereich von etwa 1 bis etwa 2 N und vorzugsweise etwa 1 bis 1,5 N aufweist.

Im Sinne der vorliegenden Erfindung weist die so erhaltene Butterphase vorzugsweise einen Fettgehalt im Bereich von etwa 80 bis etwa 88 Gew.-% und insbesondere etwa 81 bis etwa 85 Gew.-% auf.

Weiterhin bevorzugt ist, dass diese Butterphase einen Gehalt an fettfreier Trockenmasse (FFTM) im Bereich von 1 bis 3 Gew.-% und vorzugsweise etwa 2 Gew.-% aufweist. Die Mengen an Fett und Trockenmasse ergänzen sich jeweils zu 100 %, wobei die Wassermenge 16 Gew.-% nicht überschreiten darf, da es sich ansonsten nicht mehr um eine Butter gemäß EU-verordnung handelt.

Im nächsten Schritt wird die weiche Butter erwärmt, so dass sie plastisch wird und wieder geformt und geknetet werden kann, aber sich nicht verflüssigt. Dies erreicht man typisch in einem Temperaturbereich von etwa 18 bis 35 °C. Anschließend erfolgt der entscheidende Schritt, bei dem die plastifizierte Butter unter Last, d.h. unter Scherung wieder gekühlt wird. Hierzu eignet sich vor zugsweise ein Schabewärmeaustauscher oder insbesondere mindestens zwei, vorzugsweise 2 bis 5 in Reihe geschalteter Schabewärmeaustauscher, die auch in dieser Anordnung als "Kombinator" bezeichnet werden. Bei einem solchen Bauteil wird das zu kühlende Produkt in das untere Ende des vertikalen Wärmetauschers gepumpt und fließt durch den Zylinder. Es wird permanent gerührt und durch Schaber von der Zylinderwand entfernt. Heiz- oder Kühlmedien strömen in dem ringförmigen Spalt zwischen dem Wärmetauschzylinder und der isolierten Ummantelung. Auf diese Weise wird am Ende des Austauschers als Produkt eine Industriebutter mit einer Temperatur von etwa 10 bis 16 °C abgenommen, die eine Härte im Bereich von etwa 2 bis etwa 5 N und insbesondere etwa 3 bis etwa 4,5 N aufweist.

Das Butteraroma, also das 2,3-Butandion, wird zusammen mit der Butter in den ersten der Schabewärmeaustauscher eindosiert und dann zusammen mit der Buttermasse vorwärtsbewegt, wobei dann die Homogenisierung rein mechanisch durch Eintrag von Scherenergie ähnlich einem Extruder erfolgt. Die Einsatzmenge kann zwischen etwa 0,1 und etwa 1 Gew.-%, vorzugsweise zwischen etwa 0,25 und 0,75 Gew.-% - jeweils auf die Butter bezogen - liegen.

### GEWERBLICHE ANWENDBARKEIT

Ein weiterer Gegenstand der Erfindung betrifft Backwarenrohlinge, umfassend oder bestehend aus
(a) einer Teigphase und
(b) einer gehärteten Industriebutter wie oben beschrieben.

Bei der Teigphase handelt es sich vorzugsweise um einen Standard-Blätterteig, wie eingangs beschrieben.

Ein weiterer Gegenstand der Erfindung betrifft ein Verfahren zur Herstellung von Backwaren, vorzugsweise Croissants, umfassend die folgenden Schritte:
(i) Bereitstellen einer Teigphase;
(ii) Bereitstellen einer gehärteten Butter wie oben beschrieben,
(iii) Belegen der Teigphase mit der gehärteten Butter unter Erhalt eines Backwarenrohlings;
(iv) Abbacken des Rohlings.

Alternativ kann der Rohling vor dem Abbacken auch mehrfach gefaltet werden, so dass eine Schichtstruktur erhalten wird, wie sie für Blätterteig üblich ist.

Schließlich umfasst die vorliegende Erfindung auch noch die Verwendung einer Butter wie oben beschrieben zur Herstellung von Backwaren, insbesondere Blätterteigbackwaren und besonders bevorzugt von Croissants.

### BEISPIELE

### VERGLEICHSBEISPIEL V1

10 kg handelsübliche Butter mit einem Fettgehalt von 82,4 Gew.-%, einem Gehalt an fettfreier Trockenmasse von 1,8 Gew.-% und einer Härte von 1 N wurde unter Rühren auf 25 °C erwärmt, so dass eine plastische Masse erhalten wurde, die jedoch noch keine Flüssigkeit austreten ließ. Die plastifizierte Butter wurde kontinuierlich auf einen Kombinator bestehend aus 4 in Reihe geschaltete Schabewärmeaustauscher vom Typ APV Gerstenbeck-Schröder gegeben. Der Kombinator wies vier Kühlzonen auf, nämlich von 17 auf 21 auf 17 und auf 12 °C und wurde bei einem Druck von 18,5 bar betrieben. Es wurde eine Industriebutter mit einer Temperatur von 12 °C erhalten, die eine Härte von 3,3 N aufwies.

### VERGLEICHSBEISPIEL V2

10 kg handelsübliche Butter mit einem Fettgehalt von 82,6 Gew.-%, einem Gehalt an fettfreier Trockenmasse von 1,9 Gew.-% und einer Härte von 1 N wurde auf etwa 35 °C erwärmt, mit 0,5 Gew.-% 2,3-Butandion versetzt, homogenisiert und wieder unter Rühren auf 25 °C abgekühlt, so dass eine plastische Masse erhalten wurde, die jedoch noch keine Flüssigkeit austreten ließ. Die plastifizierte Butter wurde kontinuierlich auf einen Kombinator bestehend aus 4 in Reihe geschaltete Schabewärmeaustauscher vom Typ APV Gerstenbeck-Schröder gegeben. Der Kombinator wies vier Kühlzonen auf, nämlich von 17 auf 21 auf 17 und auf 12 °C und wurde bei einem Druck von 18,5 bar betrieben. Es wurde eine Industriebutter mit einer Temperatur von 12 °C erhalten, die eine Härte von 3,1 N aufwies.

### VERGLEICHSBEISPIEL V3

Vergleichsbeispiel V2 wurde wiederholt, jedoch die doppelte Menge 2,3-Butandion zugegeben.

### BEISPIEL 1

10 kg handelsübliche Butter mit einem Fettgehalt von 82,3 Gew.-%, einem Gehalt an fettfreier Trockenmasse von 1,9 Gew.-% und einer Härte von 1 N wurde unter Rühren auf 25 °C erwärmt, so dass eine plastische Masse erhalten wurde, die jedoch noch keine Flüssigkeit austreten ließ. Die plastifizierte Butter wurde kontinuierlich auf einen Kombinator bestehend aus 4 in Reihe geschaltete Schabewärmeaustauscher vom Typ APV Gerstenbeck-Schröder gegeben. Der Kombinator wies vier Kühlzonen auf, nämlich von 17 auf 21 auf 17 und auf 12 °C und wurde bei einem Druck von 18,5 bar betrieben. In den Betrieb des Kombinators wurde kontinuierlich ein 2,3-Butandion-Konzentrat in einer Menge von 0,5 Gew.-% bezogen auf den Buttereinsatz eindosiert und während des Transportes durch die Kühlphasen kontinuierlich in der Masse verteilt. Es wurde eine Industriebutter mit einer Temperatur von 12 °C erhalten, die eine Härte von 3,3 N aufwies.

### GESCHMACKLICHE BEURTEILUNG

Die geschmackliche Beurteilung erfolgte durch ein Panel von 5 erfahrenen Testern, die die Intensität des Butteraromas auf einer Skala von (1) = ohne Zugabe von 2,3-Butandion bis (5) = deutlich gesteigert beurteilen sollten. Die Ergebnisse sind in **Tabelle** 1 wiedergegeben.

**Tabelle 1**

| Verkostung von Butter | | | | |
|---|---|---|---|---|
| **Beispiele** | **V1** | **V2** | **V3** | **1** |
| Buttergeschmack | 1 | 3 | 4 | 5 |

**Vergleichsbeispiel 1** steht für eine Industriebutter, deren Buttergeschmack als Standard diente. Im **Vergleichsbeispiel V2** wurde diese Butter wieder aufgeschmolzen, die entsprechende Menge Butteraroma eingerührt und homogen verteilt. Alternativ wurde die gleiche Menge Butteraroma im erfindungsgemäßen **Beispiel 1** zusammen mit der gekühlten Butter in den Kombinator gegeben. Die Ergebnisse zeigen, dass im Vergleichsbeispiel V1 trotz gleicher Mengen Butteraroma ein deutlich geringerer Geschmackseindruck erzielt wird, als bei Eindosieren des Aromas in den Kombinator. Selbst mit der Verdoppelung der Einsatzmenge (**Vergleichsbeispiel V3**) wird das gute Ergebnis des erfindungsgemäßen Beispiels nicht erreicht.

## Patentansprüche

1. Industriebutter mit verbessertem Geschmack, dadurch erhältlich oder erhalten, dass das Herstellungsverfahren einen Schritt umfasst, bei dem Butter einer mechanischen Belastung unterworfen und gleichzeitig mit 2,3-Butandion versetzt wird.

2. Industriebutter nach Anspruch 1, **dadurch gekennzeichnet, dass** man handelsübliche Butter einsetzt, die eine Härte im Bereich von etwa 1 bis 2 N aufweist.

3. Industriebutter nach den Ansprüchen 1 und/oder 2, **dadurch gekennzeichnet, dass** man die handelsübliche Butter bis auf eine Temperatur von etwa 18 bis etwa 35 °C erwärmt.

4. Industriebutter nach mindestens einem der Ansprüche 1 bis 3, **dadurch gekennzeichnet, dass** man die plastifizierte Butter einer mechanischen Belastung unter Kühlung in einem oder mindestens zwei in Reihe geschalteten Schabewärmeaustauschern unterwirft.

5. Industriebutter nach mindestens einem der Ansprüche 1 bis 4, **dadurch gekennzeichnet, dass** man ihr das 2,3-Butandion in Mengen von etwa 0,1 bis etwa 1 Gew.-% - bezogen auf die Butter - zusetzt.

6. Verfahren zur Herstellung von Industriebutter mit verbessertem Geschmack, umfassend oder bestehend aus den folgenden Schritten:
(i) Separation von Rohmilch in eine Magermilch- und eine Rahmfraktion;
(ii) Reifung der Rahmfraktion in an sich bekannter Weise;
(iii) Verbutterung der gereiften Rahmfraktion in an sich bekannter Weise;
(iv) Erwärmen der so gewonnenen handelsüblichen Butter auf etwa 18 bis etwa 35 °C;
(v) Abkühlen der erwärmten Butter unter mechanischer Belastung;
(vi) Versetzen der abgekühlten Butter während des Schritts (v) mit 2,3-Butandion sowie
(vii) Formung der so gewonnenen geschmacksverbesserten Industriebutter.

7. Verfahren nach Anspruch 6, **dadurch gekennzeichnet, dass** man Rahm einsetzt, der einen Fettgehalt von mindestens 35 Gew.-% aufweist.

8. Verfahren nach den Ansprüchen 5 und/oder 6, **dadurch gekennzeichnet, dass** man die Rahmfraktion durch abwechselndes Erwärmen und Abkühlen reifen lässt.

9. Verfahren nach mindestens einem der Ansprüche 6 bis 8, **dadurch gekennzeichnet, dass** man in Schritt (iii) eine handelsübliche Butter herstellt, die eine Härte im Bereich von etwa 1 bis etwa 1,5 N aufweist.

10. Verfahren nach mindestens einem der Ansprüche 6 bis 9, **dadurch gekennzeichnet, dass** man die erwärmte Butter aus Schritt (iv) einer Belastung unter Kühlung in einem oder mindestens zwei in Reihe geschalteten Schabewärmeaustauschern unterwirft.

11. Verfahren nach mindestens einem der Ansprüche 6 bis 10, **dadurch gekennzeichnet, dass** man der Industriebutter während der mechanischen Belastung das 2,3-Butandion in einer Menge von etwa 0,1 bis etwa 1 Gew.-% - bezogen auf die Industriebutter zusetzt.

12. Backwarenrohling, umfassend oder bestehend aus
(a) einer Teigphase und
(b) einer Butter nach mindestens einem der Ansprüche 1 bis 5 oder nach dem Verfahren nach mindestens einem der Ansprüche 6 bis 11.

13. Backwarenrohling nach Anspruch 12, **dadurch gekennzeichnet, dass** die Teigphase ein Standard-Blätterteig ist.

14. Verfahren zur Herstellung von Backwaren, umfassend die folgenden Schritte:
(i) Bereitstellen einer Teigphase;
(ii) Bereitstellen einer geschichteten Butter nach mindestens einem der Ansprüche 1 bis 5 oder nach dem Verfahren nach mindestens einem der Ansprüche 6 bis 11;
(iii) Belegen der Teigphase mit der geschichteten Butter unter Erhalt eines Backwarenrohlings;
(iv) Abbacken des Rohlings.

15. Verwendung einer Butter nach mindestens einem der Ansprüche 1 bis 5 oder nach dem Verfahren nach mindestens einem der Ansprüche 6 bis 11 zur Herstellung von Backwaren, insbesondere Blätterteigbackwaren.
